# DEMANDE DE BREVET EUROPEEN

(11) **EP 0 584 888 A2**
(43) Date de publication de la demande: **02.03.1994**
(21) Numéro de dépôt: 93202777.4
(22) Date de dépôt: 06.06.1990
(51) Int. Cl.: A47L 11/40, B25J 9/00

(54) **Appareil autonome de nettoyage automatique de sol par exécution de missions programmées et utilisant un système de positionnement**

(30) Priorité: 07.06.1989 FR 8907758
(62) Demande divisionnaire de: 90909445.0
(71) Demandeur: ONET Société Anonyme, F-13008 Marseille (FR)
(72) Inventeur: Soupert, Jean-Louis, F-13001 Marseille (FR); Poujon, Joel, F-13009 Marseille (FR)
(74) Mandataire: Moretti, René

(57) **Abrégé**

La présente invention a pour objet un appareil autonome de nettoyage automatique de sol par exécution de missions programmées et utilisant un système de positionnement.

L'appareil comprend d'une manière connue des outils de nettoyage (2) connus supportés dans un bâti avant (1₂) démontable de la partie arrière (1₁) contenant un ensemble électronique (8) et des relais (5), une batterie électrique (4) et un pupitre de commande (15). L'ensemble de l'appareil est protégé par un carénage (7) au travers duquel sont disposés au moins 16 capteurs (9) de contrôle de distance à un obstacle ou à une paroi (29), et supporté par 4 roues dont deux sont fixes motrices et de direction (3₁), et deux arrières folles.

Le système électronique (8) pilote l'ensemble des équipements de l'appareil en mode d'exécution par lecture de mission enregistrée dans une mémoire : la correction et le contrôle de la trajectoire est effectuée par mesure des rotations des roues motrices, par un système de positionnement absolu (25) qui se repère par des balises fixes et un capteur d'initialisation (14).

## Description

La présente invention a pour objet un appareil autonome de nettoyage automatique de sol par exécution de missions programmées et utilisant un système de positionnement.

Le secteur technique de l'invention est la fabrication de robots de nettoyage de sol, roulant et se positionnant sur celui-ci pour exécuter les opérations de nettoyage suivant une mission déterminée.

Une des applications principales de l'invention est le balayage automatique et autonome avec légère aspiration de sol dans tous locaux reconnus préalablement, quel que soit les obstacles qui peuvent se présenter dans ces locaux et avec un minimum de surveillance et d'intervention de l'opérateur.

On connait en effet divers dispositifs et procédés de nettoyage de sol ou de parois en mode manuel et en automatique. En effet, avec le développement des techniques d'une part, et la volonté d'amélioration du cadre de vie et de la protection de notre environnement d'autre part, notre Société est de plus en plus exigeante en matière de propreté ; les opérations de nettoyage manuelles étant peu valorisantes pour le personnel et demandant beaucoup de main d'oeuvre sont effectuées de plus en plus par des outils montés sur des machines ou des supports pilotés par des opérateurs : ainsi se sont développés des motos et des automobiles de nettoyages de trottoirs et de chaussées, des élévateurs télescopiques pour le nettoyage des façades, des chariots brosse et aspirateur pour le nettoyage des sols et... Tous ces systèmes sont en général autonomes et nécessitent la présence d'un opérateur technicien au moins pour le piloter dans son environnement, l'amener aux endroits d'intervention et déclencher les outils de nettoyage proprement dits.

Pour des locaux ou des surfaces connues certains fabricants proposent même de supprimer l'opérateur sur l'appareil lui-même en montant sur celui-ci des équipements de télécommande, commandés soit à distance par un opérateur situé à un poste de contrôle soit par un programme pré-enregistré qui lui fait effectuer des tâches répétitives et toujours de la même façon.

On peut citer par exemple les demandes de brevets FR. 2.599.772 publiée le 11 Décembre 1987 et déposée par la société HYPER ROBOTICS INC, sur un 'robot pour l'entretien des immeubles", et celle FR. 2.519.576 publiée le 18 Juillet 1983 et déposée par la société International ROBOTIC ENGINEERING sur un "robot à pattes grimpeur". Par ailleurs, la publication ROBOTICS AGE (Avril 1986 Volume 7 pages 29 à 32) par Monsieur EVERETT sur "a second-generation autonomous sentry robot" décrit un robot sentinelle autonome ayant une certaine capacité d'adaptation à son environnement mais sans objectifs de tracé de routes comme dans le nettoyage de sol.

En effet, dans le domaine de nettoyage des sols l'opérateur reste en général nécessaire sur la plupart des engins actuels même s'il a à sa disposition un engin autonome qui comporte des outils et qu'il met en fonction par action sur des boutons de commande ; l'automatisation est donc partielle car il est en effet difficile de la rendre totale pour des sols de locaux qui peuvent être occupés temporairement par des obstacles imprévus, qui ne comportent pas de système de guidage permanent mécanique et dont le tracé n'est jamais le même quand on veut utiliser le même appareil pour plusieurs locaux. Divers appareils prototypes ont été réalisés pour tenter de répondre à ces particularités mais aucun n'y parvient à ce jour.

On peut citer par exemple le brevet US.A 4.114.711 de Monsieur J.T. WILKINS exposant un procédé et un appareil autonome de nettoyage automatique d'un type semblable à la présente invention, comportant des mémoires d'enregistrement de trajectoires et un système de guidage permanent dans un local donné; par ailleurs la publication IEEE PROCEEDINGS (Volume III, 1988 pages 1839 à 1841) of the International Conference on Robotics and Automation, April 24-29, 1988 à PHILADELPHIA sur "a cleaning robot control" décrit un appareil programmé pour suivre des voies droites et éviter son câble d'alimentation.

Le problème posé est de pouvoir déplacer et opérer les outils de nettoyage de sol sans intervention directe de l'opérateur en automatique et de manière autonome dans tous locaux, quelques soient les obstacles qui peuvent surgir, sans installation permanente mécanique ou autres de guidage, et en effectuant plusieurs missions successives différentes.

Une solution au problème posé est un appareil autonome de nettoyage automatique de sol comportant un bâti support de type comprenant des outils connus adaptés audit nettoyage, des moyens de propulsions et de direction par roues, une alimentation électrique par batterie embarquée, divers convertisseurs et relais, et des manettes de commandes, regroupés sur un pupitre comportant un affichage et un clavier, et permettant le fonctionnement desdits outils et des dits moyens de propulsions et de direction, lequel appareil est recouvert d'un carénage de protection ; cet appareil comporte en outre un système électronique de type micro-ordinateur composé d'au moins un microprocesseur, une mémoire morte fixe, une mémoire effaçable et diverses cartes d'interfaces d'entrées/sorties connectées en particulier aux divers composants permettant le fonctionnement et la mise en route desdits outils et moyens de propulsion et de direction, des capteurs fixes de contrôle de distance et au moins un capteur d'initialisation, lesquels capteurs sont connectés à au moins une desdites cartes d'entrées/sorties et sont placés sur ledit carénage de protection; une carte d'entrées/sorties spécifique du microprocesseur est reliée au pupitre, et la mémoire morte du système électronique est chargée par un programme assurant d'une part, en permanence et d'une manière connue et automatique, la gestion de toutes les cartes d'interfaces d'entrées/sorties et de tous les équipements reliés aux dites cartes, et d'autre part à la demande et successivement en plusieurs lieux et pour des missions différentes, d'une phase d'exécution par répétition d'une mission de nettoyage enregistrée et cela, d'une manière automatique même en cas d'obstacle imprévu détecté par lesdits capteurs de contrôle des distances et à partir d'un même point de repère sur lequel est recalé ledit capteur d'initialisation au début de chaque exécution de la même mission sur la même trajectoire, lequel appareil comporte un système de positionnement connu compatible avec des balises de références fixes situées à proximité du sol à nettoyer, et, à partir desquelles et à tout moment choisi, ledit appareil est positionné sur ledit sol.

Dans un mode de réalisation préférentiel, ladite mémoire effaçable est constituée d'une carte de sauvegarde sur laquelle est connectée tout support d'enregistrement interchangeable de type disquette magnétique ou autre mémoire effaçable de type "RAM" de telle façon que l'on puisse enregistrer et reproduire plusieurs missions par simple changement dudit support de mémoire effaçable ; on peut changer alors ledit support et on enregistre sur d'autres supports autant de missions correspondantes chacune à un sol et à un type de nettoyage donné et choisi par l'opérateur.

Le résultat est de nouveaux procédés et dispositifs autonomes de nettoyage automatique de sol pour exécution de missions programmées dont les caractéristiques permettent de satisfaire aux impératifs de toutes ces missions quelque soit les perturbations pouvant intervenir au cours de celles-ci. En effet, la combinaison sur un même engin des divers équipements et procédés dont certains sont du reste connus et développés par ailleurs tel que décrit ci-après, permet à ces dits engins de s'adapter à toute disposition de sols sans programmation et équipement propre à celui-ci, ce qui simplifie énormément l'adaptation de l'engin à tout local et ne demande pas d'opérateur spécialisé.

De plus la possibilité d'enregistrer ces missions dans des mémoires interchangeables assure une adaptabilité sans limite par changement de ces mémoires.

Par ailleurs, le repérage de l'engin par tous systèmes de positionnement absolu lié au local permet à l'engin de se recaler en permanence dans celui-ci, et d'exécuter donc sa mission en respectant son tracé même s'il y a des dérives mécaniques, parasites, que l'on ne peut jamais éliminer : ceci a été du reste un frein à tout développement de ce type de robot qui, après quelques minutes de fonctionnement, se perdait en dehors de son tracé prévu, ce qui limitait son intérêt car il nécessitait un opérateur de contrôle pour le remettre sur sa trajectoire à intervalles réguliers.

Un autre intérêt est que même si des obstacles se placent sur le tracé de l'appareil, celui-ci, grâce au procédé et au dispositif de la présente invention, peut le contourner et se replacer sur sa trajectoire une fois le contournement effectué, et cela sans intervention de l'opérateur.

Ainsi tous ces dispositifs et procédés, apportant chacun quelques avantages et il y en a d'autres, tels que dans le descriptif suivant, sont complémentaires les uns des autres, et en l'absence de l'un d'eux les opérations ne pourraient pas être réalisées correctement sans appel fréquent à un opérateur contrôleur, ce qui réduit alors l'intérêt de tels équipements assez onéreux : les prix de ceux-ci se justifient en effet, et ne peuvent s'amortir pour un utilisateur que si la présence de personnel est suffisamment réduite, si ce n'est supprimé pour permettre alors à une seule personne d'opérer et de suivre plusieurs appareils à la fois, augmentant alors les rendements et les capacités de nettoyage simultanées.

Dans le descriptif suivant, nous décrivons essentiellement un exemple de dispositif suivant l'invention en particulier dans l'application au nettoyage de sol avec un engin comportant des outils et des équipements connus par ailleurs, mais d'autres outils et équipements et applications peuvent être envisagés : les dessins, figures et descriptifs ci-après n'ont aucun caractère limitatif.

La figure 1 est une vue schématisée de côté d'un exemple d'appareil suivant l'invention.

La figure 2 est une vue de dessus du même appareil le long d'une paroi.

La figue 3 est un schéma simplifié du système électronique du pilotage de l'appareil.

La figure 4 est un exemple de trajectoire et de mission rééxécutée à la demande.

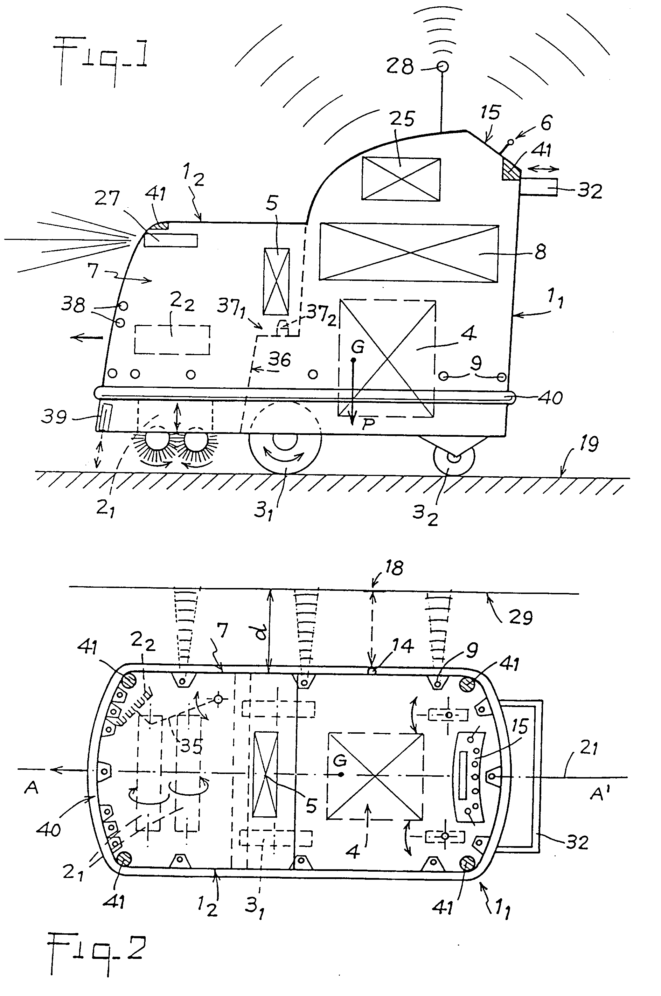

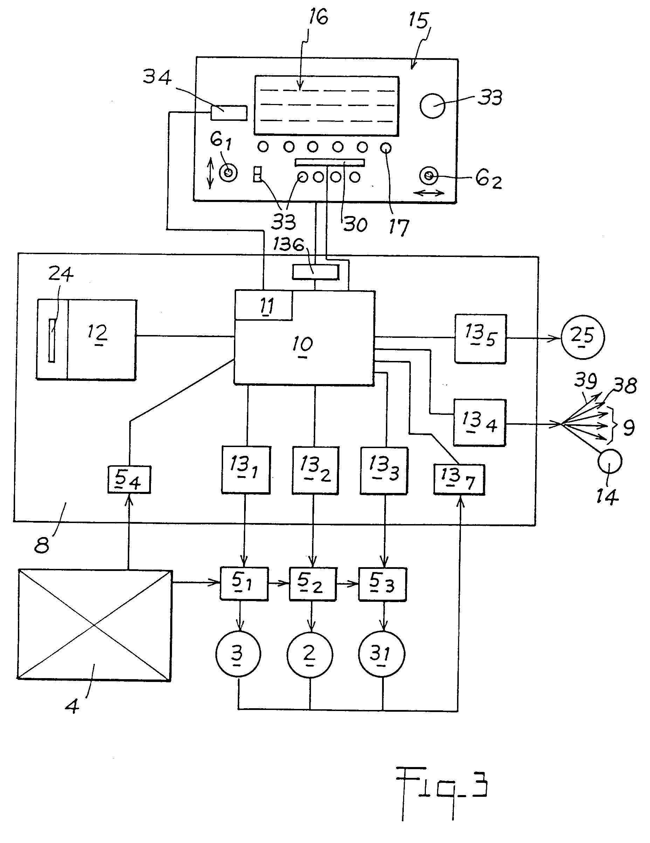

La figure 1 est une vue schématisée de côté d'un exemple d'un appareil 1 autonome de nettoyage automatique de sol 19 grâce à divers outils 2 spécialisés connus tel qu'incluant au moins une brosse centrale rotative 2₁, une aspiration inférieure et une brosse latérale 2₂ montée sur un bras extensible permettant son déploiement sur un des côtés de l'appareil comme indiqué sur la figure 2. Ces outils sont commandés en mise en place puis en fonctionnement, tel que en montée ou descente pour l'outil ventral 2₁, en mise en route pour l'aspiration et le balayage, en extension et en rotation pour la brosse latérale, à travers une carte d'interface d'un système électronique 8 décrit ci-après et de relais 5 alimentés par une batterie embarquée 4. L'ensemble de ces outils 2 d'une part, et des moteurs d'entraînement, des équipements électriques, électroniques, d'alimentation et de commande d'autre part sont montés sur au moins 2 batis ou châssis, recouverts d'un carénage 7, en une ou plusieurs parties, camouflant l'ensemble de l'appareil et lui donnant un aspect extérieur d'une part esthétique suivant le choix de l'utilisateur, et d'autre part fonctionnel pour éviter les risques d'accrochages.

Pour éviter également les risques consécutifs à des contacts brutaux avec un autre obstacle en mouvement qui n'aurait pas été détecté, suffisamment rapidement ou à cause d'un angle mort, par les capteurs décrits ci-après, une ceinture 40 ou arceau de sécurité entoure tout l' appareil de préférence à sa partie basse : cette ceinture peut être constituée de matière de type mousse, caoutchouc ou plastique à la manière d'un parechoc, et comporter des capteurs de contact qui lorsqu'ils sont sollicités permettent de déclencher l'arrêt immédiat de l'appareil.

Autour de ce carénage 7 et à une hauteur quelconque mais de préférence à 420 mm du sol 19, sont disposés en ceinture des capteurs de contrôle et de mesure 9 de distance pour la détection d'obstacles tel que décrit ci-après et qui peuvent être en particulier des capteurs ultra-sonores, en nombre égal au moins à seize dont au moins 3 sur chaque face latérale et neuf sur la moitié avant bloc outil 1₂ en avant des roues centrales 3₁.

Sur l'avant de l'appareil 1 et à une hauteur quelconque du sol 19, il peut comporter en option une caméra vidéo 27 de tout type connu qui permet de filmer l'espace situé devant le carénage : cette caméra est reliée et couplée, d'une manière connue, sur au moins deux canaux automatiques commutables en cas de perturbation sur un des canaux à un système émetteur/récepteur d'ondes 28, radio compatible, travaillant par exemple à 1,5 Ghz et permettant de transmettre les images prises par ladite caméra à un poste de contrôle, disposant également d'un émetteur/récepteur compatible et d'un moniteur vidéo.

Un opérateur peut ainsi visualiser à la demande, en sécurité ou en vérification, ce qui se passe dans l'appareil 1.

Sur l'avant également de l'appareil 1 et à une hauteur comprise entre 600 et 900 mm, il comporte au moins un autre capteur 38 de contrôle et de mesure de distance comme ceux de la ceinture 9 pour la détection d'obstacles hauts n'ayant pas d'appui au sol sous toute leur surface, tel que par exemple les tables et les fenêtres. Ce dit capteur 38 peut être un de ceux de la ceinture 9 décalé alors vers le haut.

De plus toujours à l'avant, il peut être disposé au moins un capteur 39 qui peut être de type infrarouge, placé et orienté en dessous de l'appareil en direction du sol 19 afin de déceler une rupture de celui-ci tel que par exemple un escalier descendant, une trappe ouverte ou un quai : de préférence on place un des ces capteurs 39 à chaque angle avant de l'appareil.

Le châssis support constituant l'ossature de la partie arrière 1₁ de celui-ci peut être un ensemble mécanosoudé rigide entièrement réalisé en acier. La partie inférieure peut être fabriquée en une seule tôle pliée qui constitue l'ossature rigide encaissant tous les efforts et les déformations mécaniques, et la partie supérieure qui reçoit le carénage 7 peut être constituée de cornières et de tôles fines.

Les dimensions principales extérieures peuvent être de l'ordre de 750 mm de longueur, 500 mm de largeur et 1 350 mm de hauteur maximum. La structure de cette partie arrière 1₁ repose par l'intermédiaire de suspensions sur quatre roues 3 dont deux roues motrices 3₁ et deux roues folles 3₂. Les deux roues motrices 3₁ sont à l'avant de cette partie, et en avant du centre de gravité G de l'ensemble de l'appareil 1, et en arrière alors de la partie 1₂ supportant les outils 2 proprement dit de nettoyage placés alors en porte à faux. Ces roues motrices sont dans des plans fixes latéraux parallèles à l'axe AA' de l'appareil comme représenté sur la figure 2 : leur diamètre peut être de 300 mm environ. Les deux roues folles 3₂ sont placées à l'arrière et montées libres aussi bien sur leur axe de rotation que dans le plan vertical, afin de pouvoir autoriser les changements de direction : leur diamètre peut être de 120 mm environ.

Les roues motrices sont entraînées par des blocs motoréducteurs électriques modulaires et étanches, indépendant l'un de l'autre et dont la commande à des vitesses différentes entraîne des changements de direction. De plus, des systèmes connus de mesure de la rotation puis d'intégration de celle-ci, permettent le calcul de la distance parcourue par chaque roue, et donc la connaissance de l'orientation et de la position instantanée de l'appareil 1.

La partie avant 1₂ de l'appareil ou bloc outils accrochée en porte à faux sur la partie arrière 1₁ peut avoir des dimensions en rapport avec celles de la partie arrière, citées en exemple ci-dessus, d'environ 500 mm de largeur, 400 mm de longueur et 960 mm de hauteur, avec un poids maximum par exemple de 50 Kg.

Les surfaces de séparation 36 entre la partie avant ou bloc-outil 1₂ et la partie arrière 1₁ peut être en forme de marche d'escalier constituée par exemple de tôle châssis avec un rebord 37₁ plan recevant les efforts d'appui comprenant un système 37₂ de centrage et de retenu entre les deux parties dont l'une contient par exemple au moins une partie femelle et l'autre une pièce mâle compatible.

L'ensemble relais 5 de commande de ce bloc-outil est situé alors proche de cette surface de séparation et n'est relié à la partie arrière 1₁ que par un seul câble d'alimentation et de télécommande ; un autre cable permet la liaison également des capteurs 9, 38 et 39 situés sur la partie avant et ces 2 cables comportent chacun une prise déconnectable dont la séparation permet très facilement celle du bloc-outil qu'on dégage alors de la partie arrière en le soulevant simplement par des poignées de la surface d'appui 37₁. Ceci permet un échange standard modulaire et très rapide, soit pour contrôle ou entretien, soit pour installer un autre bloc-outil comportant d'autres fonctions.

Dans la partie supérieure arrière de l'appareil 1₁ et éventuellement sous ledit carénage 7, l'appareil comporte un système de positionnement connu 25 compatible avec des balises de références fixes situées à proximité du sol 19, par exemple sur des piliers, plafond ou murs d'un local à nettoyer, et à partir desquelles et à tout moment ledit appareil est positionné sur ledit sol 19 par interrogation de ces dites balises, grâce à une émission d'ondes compatibles avec celles-ci et la perméabilité du carénage. On calcule alors leur distance à l'appareil et par la même on connait ladite position de celui-ci.

Enfin, dans cette même partie supérieure et à l'arrière de l'appareil 1, celui-ci comporte un pupitre 15 de commande et de contrôle, tel que décrit ci-après avec au moins un levier ou manette de commande 6 de la motricité de roues et direction 3₁ ainsi qu'une poignée de manoeuvre 32.

La figure 2 est une vue de dessus du même appareil 1 placé le long d'une paroi 29. On retrouve le bloc outil 1₂ contenant en particulier la brosse centrale 2₁.

Dans la présente configuration cette brosse centrale est en fait constituée de deux balais 2₁ en cylindres d'axes horizontaux et contra rotatifs, nettoyant donc le sol en avant des roues et soulevant les salissures qui sont alors aspirées dans un réservoir situé au-dessus. Ces balais rotatifs peuvent être par exemple de 30 cm de long minimum et peuvent être préférentiellement de la largeur de l'appareil soit dans notre exemple de réalisation 500 mm pour augmenter la surface à nettoyer à chaque passage et améliorer ainsi le rendement.

La brosse latérale 22 montée sur un bras extensible 35 est figurée ici en position rentrée. En position sortie ce bras 35 est tel qu'il permet d'assurer un balayage le long de ladite paroi 29 située par exemple à une distance (d) de 30 cm environ de l'appareil : cette distance est contrôlée par au moins 3 capteurs 9 fixes de contrôle, situés du même côté, et permettant l'asservissement de trajectoire 21 de l'appareil tel que son axe AA' reste parallèle le long de ladite paroi 29 et à distance constante.

En effet, dans ce cas ou chaque fois que l'on veut une trajectoire parallèle et proche d'une paroi, on interroge cycliquement les trois au moins desdits capteurs 9 fixes, disposés sur la face du dit carénage 7 qui doit rester le long de ladite paroi, on relève et on compare les distances mesurées par chacun et en cas de variation de celles-ci les unes par rapport aux autres, on agit sur les moyens de direction que sont les roues motrices 3₁ pour annuler ladite variation.

Dans la partie arrière 1₁ de l'appareil tous les principaux équipements de la figure 1 ne sont pas représentés dans la figure 2. On retrouve cependant les batteries embarquées 4 assurant l'alimentation électrique de tout l'appareil délivrant par exemple une tension de 48 volts, tel que 24 éléments de 2 volts, et permettant un fonctionnement normal de l'ensemble pendant au moins 4 heures, à travers des relais, convertisseurs et/ou variateurs 5, lesquels sont situés dans la partie avant et pilotés par le système électronique décrit à la figure suivante.

Le pupitre 15 est également décrit ci-après, et la barre ou poignée 32 de guidage manuel pour déplacer l' appareil, quand sa motorisation est arrêtée, peut avoir toute forme : être basculable, rétractable et/ou démontable car en fonctionnement normal elle n'est pas nécessaire.

Cette poignée de manoeuvre ou de guidage 32 dans un mode de réalisation préférentiel est escamotable dans le carénage de la partie arrière et s'intègre en position rentrée dans celui-ci. Une commande de débrayage est associée en outre à cette poignée de telle façon que quand on la tire pour la dégager du carénage afin de s'en servir pour manoeuvrer l'appareil manuellement, les roues motrices sont automatiquement débrayées par un dispositif électrique, mécanique ou les deux.

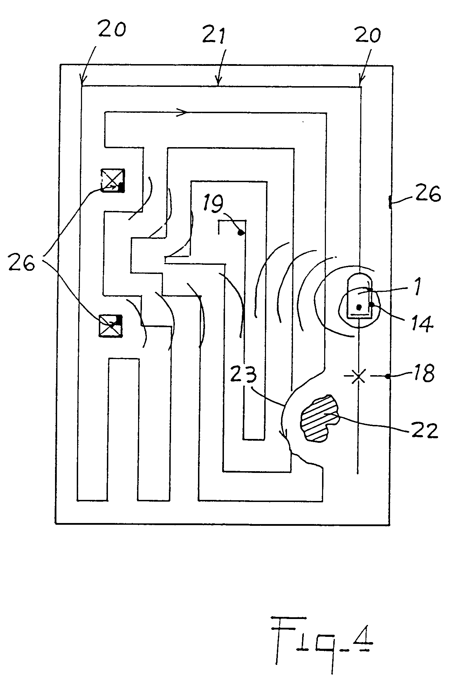

Sur un des côtés de l'appareil est disposé un capteur 14 d'initialisation spécifique qui peut détecter, seulement quand ledit appareil passe devant à une distance donnée, un point de repère fixe 18 par exemple situé sur la paroi 29. Ce capteur peut être optique, à infrarouge, et le point de repère comportant un code d'identification reconnaissable par l'appareil. Ceci permet l'initialisation de procédés tel que rappelé dans la figure 4. On fait fonctionner par exemple l'appareil alors en mode suivi de paroi automatique depuis l' amont de ce point à une distance constante donnée associée correspondant à cette initialisation jusqu'à ce que l'appareil, passant devant le point de repère, passe alors en mode d'enregistrement ou en mode exécution.

Aux quatre angles supérieurs de l'appareil et intégré dans son carénage, il est disposé un clignotant lumineux 41, qui s' allume dès que l'appareil se met en mouvement pour alerter toute personne alentour de son approche.

Par ailleurs, l'appareil peut être doté d'un klaxon qui se déclenche automatiquement quand un des dits capteurs 9 de contrôle de distance détecte un obstacle devant lui, empêchant l'exécution de sa trajectoire et faisant donc arrêter l'appareil. Après un temps de temporisation la programmation de l'appareil peut ensuite, si l'obstacle demeure, lui faire effectuer une procédure de contournement, mais s'il s'agit de personnes, le klaxon et les clignotants doivent les faires s'écarter pour que l'appareil reprenne sa trajectoire.

La figure 3 est un schéma simplifié du système électronique 8 de pilotage de l'appareil 1 décrit précédemment et des différents organes périphériques de celui-ci. Ce système électronique comporte en particulier au moins un microprocesseur 10 associé à une mémoire morte fixe 11 de type "EEPROM" et une mémoire effaçable de type "RAM" 12. Il est alimenté à travers un régulateur 54 par les batteries 4 et peut comporter sa propre alimentation de sauvegarde. Il est relié par ailleurs à au moins une carte d'interface d'entrée/sortie 13 connectée elle-même à tous les organes et composants permettant le fonctionnement et la mise en route des outils 2, qui dans une version préférentielle de réalisation peuvent être au nombre de huit, des moyens de propulsion 3, du système de positionnement 25, des capteurs 9, 38, 39 et 14, du pupitre de commande 15 et de tout système de sécurité 31 tel que l'arceau de protection ou ceinture 40, les clignotants 41,...

Il peut y avoir une carte interface par type de composants comme représentées sur la figure et numérotées de 13₁ à 13₇, ou certains groupes de composants peuvent être reliés à une seule carte, et celles-ci peuvent comporter un microprocesseur intégré pour soulager celui du système central.

L'ensemble de ces cartes interfaces et de mémoire, est reliée au microprocesseur 10 par un ou plusieurs bus suivant l'architecture retenue. Les organes de puissance sont alimentés directement par les batteries 4 à travers des relais, variateurs et/ou convertisseurs 5 pilotés d'une manière connue par lesdites cartes d'interface 13 correspondantes, et suivant le déroulement du programme contenu dans la mémoire 11 du microprocesseur 10 et dont un exemple d'exécution est décrit dans la figure 4 et ci-après.

Ces dits organes de puissance sont eux-mêmes contrôlés par des capteurs renvoyant l'information de leur fonctionnement par une carte d'entrée spécifique 13₇.

Dans un mode de réalisation préférentiel ladite mémoire effaçable 12 est constituée d'une carte de sauvegarde sur laquelle est connectée tout support d' enregistrement interchangeable 24 de type disquette ou cassette magnétique ou toute mémoire effaçable de type RAM ("Read after memory") de telle façon que l'on puisse enregistrer, transférer puis reproduire plusieurs missions, pour le même ou pour des sols différents, et correspondant chacune à un type de nettoyage donné et choisi par l'opérateur.

Pour simple changement desdits supports de mémoire effaçables dans la mémoire desquels on a enregistré les phases desdites missions qui sont alors transférées dans la mémoire 12, on peut faire effectuer à l'appareil chacune d'entre elles.

Pour obtenir la meilleure compréhension, diversité et évolution possible de la commande et du contrôle de l'appareil, le pupitre 15 de contrôle et de commande de l'appareil comporte au moins un levier de marche avant et arrière 6₁, un levier de changement de direction droite et gauche 6₂, un clavier d'au moins six boutons de contrôle des fonctions dudit programme et d'ordres de missions, et un affichage 16 d'au moins trois lignes dont la première affiche au moment considérée lesdites fonctions d'ordres affectées alors auxdits boutons 17, la deuxième affiche les questions et les messages édités par le système électronique au fur et à mesure du déroulement dudit programme et la troisième affiche la réponse et l'ordre rentré par l'opérateur.

Ainsi même si on change les données du programme contenu dans la mémoire 11 et si on rajoute des fonctions, tels que des outils ou des capteurs supplémentaires, il n'est pas nécessaire de modifier ce dit pupitre ; il suffit de changer les affichages à l'écran et les affectations des boutons 17 du clavier éventuellement par l'intermédiaire du logiciel. Celui-ci peut rester ainsi limité à six boutons principaux, car s'il faut commander d'autres fonctions, il suffit d'affecter au même bouton d'autres possibilités d'ordres et d'afficher séquentiellement et simultanément à l'opérateur la légende et la signification correspondante.

Par ailleurs, ledit pupitre 15 de contrôle peut comporter un emplacement 30 permettant d'y connecter ledit support 24 d'enregistrement interchangeable afin d'en simplifier l'interchangeabilité par l'opérateur.

Le pupitre comprenant également d'autres boutons et signaux 33 de contrôle connus tel que l'alimentation générale, les alarmes, le contrôle des batteries, et...

Il peut être disposé également une fiche de raccordement 34 permettant d'y connecter un terminal extérieur pouvant dialoguer avec le système électronique 8 pour effectuer les tests, et/ou pour apporter des modifications aux données du programme de base enregistré dans la mémoire 11.

Enfin, ledit pupitre de commande 15 peut inclure un microprocesseur qui gère les informations entrées par l'opérateur dans ce pupitre, et celles générées par le système électronique 8 pour l'affichage 16 et l'affectation des fonctions du clavier 17, lequel microprocesseur remplace la carte d'interface spécifique 136 et permet la connexion dudit pupitre 15 par une ligne série directement au microprocesseur 10.

La figure 4 est un exemple de trajectoire et de mission enregistrée et rééxécutée à la demande.

On dispose pour cela des balises 26 sur des surfaces tels que piliers ou parois à proximité du sol 19 à nettoyer, et en nombre suffisant pour que tout endroit de ce sol soit à portée directe d'au moins 2 balises si ce n'est 3. On amène l'appareil 1 en mode libre à un point de repère 18 fixe choisi ou en amont de celui-ci sur lequel on cale le capteur d'initialisation 14 à une position et distance donnée, en utilisant par exemple le mode de suivi de paroi et on passe alors en mode exécution automatique : l'appareil rééxécute seul les déplacements et les opérations de nettoyage telles que mises en mémoire et suivant la trajectoire 21 enregistrée. Durant cette phase d'exécution l'appareil scrute en permanence son environnement surtout en avant, grâce aux capteurs 9 de distance dont 7 au moins sont disposés vers l'avant, qui détectent alors tout obstacle qui n'était pas lors de la phase d'enregistrement, et s'il gène la trajectoire, l'appareil s'arrête. Si on a choisi de programmer préalablement cette possibilité, le système électronique peut faire effectuer alors une procédure de contournement par exécution d'un mode de suivi de paroi le long dudit obstacle 22 suivant un côté prédéterminé jusqu'à recouper la trajectoire mise en mémoire qu'il peut alors reprendre.

Ce suivi de trajectoire se fait avec très peu d'écart et d'erreur à la reproduction d'une part grâce à tout système de contrôle connu des rotations des roues motrices 3 qui permet par intégration de connaître exactement la distance parcourue et de reproduire les courbes avec exactitude, et d'autre part grâce au système de positionnement 25 connu embarqué sur l'appareil. Celui-ci relève les distances de l'appareil aux balises 26, à tout instant et surtout à chaque point spécifique 20 , que ce soit pour l'enregistrement ou en mode d'exécution pour la vérification, par comparaison, entre cet enregistrement et la trajectoire réelle, afin de faire exécuter les corrections éventuelles nécessaires. Ainsi au bout de 4 h de fonctionnement en nettoyage, des essais ont démontré que l'écart final de position est bien inférieur à 20 cm, ce qui est compatible avec les débattements des outils et des capteurs d'obstacle et ne bloque jamais l'appareil.

La présente invention n'est pas limitée au mode de réalisation décrit ci-dessus et qui ne constitue que des exemples de dispositifs et de procédés suivant l'invention : des modifications et des variantes peuvent être apportées dans le cadre de celle-ci en particulier dans le choix des équipements de positionnement 25, du système électronique 8 et du programme d'exécution et de pilotage.

## Revendications

1. Appareil autonome de nettoyage automatique de sol comportant un bâti support de type comprenant des outils connus adaptés (2) audit nettoyage, des moyens de propulsions et de direction par roues (3), une alimentation électrique par batterie (4) embarquée, divers convertisseurs et relais (5), et des manettes de commandes (6) permettant le fonctionnement desdits outils (2) et des dits moyens de propulsions et de direction, lequel appareil est recouvert d'un carénage de protection (7) et comporte un système électronique (8) de type micro-ordinateur composé d' au moins un microprocesseur (10), une mémoire morte fixe (11), une mémoire effaçable (12) et diverses cartes d'interfaces (13) d'entrées/sorties connectées en particulier aux divers composants permettant le fonctionnement et la mise en route desdits outils (2) et moyens de propulsion et de direction (3), des capteurs (9) fixes de contrôle de distance et au moins un capteur d'initialisation (14), lesquels capteurs sont connectés à au moins une desdites cartes d'entrées/sorties (134) et sont placés sur ledit carénage de protection (7), caractérisé en ce qu'il comporte en outre un pupitre (15) disposant d'un affichage (16) et d'un clavier (17), regroupant lesdites manettes de commande (6), et relié à une carte d'entrées/sorties spécifique (136) du microprocesseur (10), laquelle mémoire morte (11) du système électronique (8) est chargée par un programme assurant d'une part, en permanence et d'une manière connue et automatique, la gestion de toutes les cartes d'interfaces d'entrées/sorties (13) et de tous les équipements reliés aux dites cartes, et d'autre part à la demande et successivement en plusieurs lieux et pour des missions différentes d'une phase d'exécution par répétition d'une mission de nettoyage enregistrée et cela, d'une manière automatique même en cas d'obstacle imprévu (22) détecté par lesdits capteurs (9) de contrôle des distances et à partir d'un même point de repère (18) sur lequel est recalé ledit capteur d'initialisation (14) au début de chaque exécution de la même mission sur la même trajectoire (21), lequel appareil comporte un système de positionnement connu (25) compatible avec des balises de références fixes (26) situées à proximité du sol (19) à nettoyer, et, à partir desquelles et à tout moment choisi, ledit appareil (1) est positionné sur ledit sol (19).

2. Appareil autonome de nettoyage automatique de sol suivant la revendication 1 caractérisé en ce que ladite mémoire effaçable (12) est constituée d'une carte de sauvegarde sur laquelle est connectée tout support d'enregistrement interchangeable (24) de type disquette magnétique ou autre mémoire effaçable de type "RAM" de telle façon que l'on puisse enregistrer et reproduire plusieurs missions par simple changement dudit support de mémoire effaçable.

3. Appareil autonome de nettoyage automatique de sol suivant l'une quelconque des revendications 1 à 2 caractérisé en ce qu'il comporte une caméra vidéo (27) de tout type connu et un émetteur d'ondes (28) permettant de transmettre des images prises par ladite caméra à un poste de contrôle disposant d'un récepteur compatible.

4. Appareil autonome de nettoyage automatique de sol suivant l'une quelconque des revendications 1 à 3 caractérisé en ce que ledit pupitre (15) de contrôle et de commande de l'appareil (1) comporte au moins un levier de marche avant et arrière (6₁), un levier de changement (6₂) de direction droite et gauche, un clavier (17) d'au moins six boutons de contrôle des fonctions dudit programme d'ordres de missions, et un affichage (16) d'au moins 3 lignes dont la première affiche au moment considérée lesdites fonctions et d'ordres affectées alors auxdits boutons (17), la deuxième affiche les questions et les messages édités par le système électronique au fur et à mesure du déroulement dudit programme et la troisième affiche la réponse et l'ordre rentré par l'opérateur.

5. Appareil autonome de nettoyage automatique de sol suivant l'une quelconque des revendications 1 à 4 caractérisé en ce que ledit pupitre (15) de contrôle comporte un emplacement (30) permettant d'y connecter ledit support (24) d'enregistrement interchangeable.

6. Appareil autonome de nettoyage automatique de sol suivant l'une quelconque des revendications 1 à 5 caractérisé en ce que lesdites batteries embarquées (4) assurant l'alimentation électrique délivrent une tension de 48 volts et permettent un fonctionnement normal de l'appareil (1) pendant au moins 4 heures.

7. Appareil autonome de nettoyage automatique de sol suivant l'une quelconque des revendications 1 à 6 caractérisé en ce que le bras extensible (35) de la brosse latérale (2₂) est tel qu'il permet d'assurer un balayage le long d'une paroi (29) à 30 cm environ de l'appareil, laquelle distance (d) étant contrôlée par au moins trois capteurs (9) fixes de contrôle de distance situés du même côté et permettant l'asservissement de trajectoire (21) de l'appareil, tel que son axe (AA') reste parallèle le long de ladite paroi (29) et à distance constante.

8. Appareil autonome de nettoyage automatique de sol suivant l'une quelconque des revendications 1 à 7 caractérisé en ce que ledit pupitre de commande (15) inclue un microprocesseur qui gère les informations entrées par l'opérateur dans ce pupitre et celles générées par le système électronique (8) pour l'affichage (16) et l'affectation des fonctions du clavier (17), lequel microprocesseur remplace la carte d'interface spécifique (136) et permet la connexion dudit pupitre (15) par une ligne série directement au microprocesseur (10).

9. Appareil autonome de nettoyage automatique de sol suivant l'une quelconque des revendications 1 à 8 caractérisé en ce que les surfaces de séparation (36) entre la partie avant ou bloc-outil (1₂) et la partie arrière (1₁) peut être en forme de marche d'escalier constituée par exemple de tôle châssis avec un rebord (37₁) plan recevant les efforts d'appui comprenant un système (37₂) de centrage et de retenu entre les deux parties dont l'une contient par exemple au moins une partie femelle et l'autre une pièce mâle compatible.

10. Appareil autonome de nettoyage automatique de sol suivant l'une quelconque des revendications 1 à 9 caractérisé en ce qu'il comporte une poignée de manoeuvre (32) escamotable dans le carénage et associée à une commande de débrayage qui débraye automatiquement les roues motrices lorsqu'on tire ladite poignée pour la dégager dudit carénage.
